# EUROPÄISCHE PATENTSCHRIFT

(11) **EP 2 437 962 B1**
(45) Veröffentlichungstag und Bekanntmachung des Hinweises auf die Patenterteilung: **25.10.2017**
(21) Anmeldenummer: 10723529.3
(22) Anmeldetag: 28.05.2010
(51) Int. Cl.: E05F 15/00, B60R 25/20, B60R 25/24

(54) **VERFAHREN UND VORRICHTUNG ZUR BETÄTIGUNG EINES SCHLIESSELEMENTS EINES FAHRZEUGS**
METHOD AND SYSTEM FOR CONTROLLING THE OPENING AND CLOSING OF A DOOR OR TRUNK OF A VEHICLE
METHODE ET DISPOSITIF POUR ACTIONNER UN OUVRNAT D'UN VÉHICULE

(30) Priorität: 02.06.2009 DE 102009023594
(43) Veröffentlichungstag der Anmeldung: 11.04.2012
(73) Patentinhaber: Volkswagen Aktiengesellschaft, 38440 Wolfsburg (DE)
(72) Erfinder: KRÖMKE, Carsten, 3812 Braunschweig (DE); ETTE, Bernd, 38442 Wolfsburg (DE)
(74) Vertreter: Sticht, Andreas
(86) Internationale Anmeldenummer: PCT/EP2010/003274
(87) Internationale Veröffentlichungsnummer: WO 2010/139439

(56) Entgegenhaltungen:
- EP-A1- 1 902 912
- EP-A2- 0 770 749
- DE-B3-102004 041 709
- DE-U1-202005 020 140
- FR-A1- 2 920 172

## Beschreibung

Die vorliegende Erfindung betrifft ein Verfahren und eine Vorrichtung, um ein Schließelement bzw. Tür oder Klappe, insbesondere eine Heckklappe, eines Fahrzeugs berührungslos zu betätigen.

Die FR 2920172A1 beschreibt ein Verfahren zum automatischen Entriegeln eines Öffnungsteils. Dabei wird dieses Teil nur entriegelt, wenn vorher ein dem Fahrzeug zugeordneter ID-Geber erfasst wurde. Als Alternative wird beschrieben, dass ein Näherungssensor eine Kamera aktiviert.

Die DE 10 2004 041 709 B3 offenbart ein Fahrzeug mit einer aufgrund eines Öffnungsbefehls automatisch öffnenden Klappe, wobei der Öffnungsbefehl ohne manuelle Betätigung eines Ent-/Verriegelungsmechanismus erfolgt.

Die DE 10 2006 015 930 A1 offenbart ein Verfahren zum automatischen Öffnen eines Elements eines Kraftfahrzeugs. Dabei wird das Element geöffnet, wenn ein tragbarer Codegeber zumindest eine zum automatischen Öffnen des Elements berechtigende vorgebbare Positionsänderung durchführt.

Die DE 10 2006 037 237 A1 beschreibt ein Verfahren zum Steuern einer Tür eines Fahrzeugs, wobei ein Bewegungsmuster eines mobilen Identifikationsgebers relativ zu dem Fahrzeug erfasst wird.

Die Verfahren zum berührungslosen Öffnen oder Schließen von Türen oder Klappen nach dem Stand der Technik arbeiten zum einen nicht leistungseffizient oder ungenau und können zum anderen nicht sicherstellen, dass die sich öffnende oder sich schließende Klappe oder Tür zu keiner Verletzung bei der berechtigten Bedienperson führt.

Die vorliegende Erfindung stellt sich daher die Aufgabe, eine automatische Betätigung eines Schließelements eines Fahrzeugs zu realisieren, welche hinsichtlich der Probleme nach dem Stand der Technik einen Fortschritt darstellt.

Diese Aufgabe wird erfindungsgemäß durch ein Verfahren zur automatischen Betätigung eines Schließelements nach Anspruch 1 oder Anspruch 3 oder durch eine Vorrichtung zur Betätigung eines Schließelements nach Anspruch 6 oder 11 sowie durch ein Fahrzeug nach Anspruch 14 gelöst. Die abhängigen Ansprüche definieren bevorzugte und vorteilhafte Ausführungsformen der vorliegenden Erfindung.

Im Rahmen der vorliegenden Erfindung wird ein Verfahren zur automatischen Betätigung eines Schließelements eines Fahrzeugs bereitgestellt. Dabei wird das Schließelement automatisch betätigt, d.h. geöffnet, wenn es geschlossen ist, oder geschlossen, wenn es geöffnet ist, wenn folgende beiden Bedingungen erfüllt sind:
- Eine einem vorgegebenen Bewegungsprofil entsprechende Bewegung eines Objekts in einem Umgebungsbereich des Fahrzeugs wird erfasst.
- Zur gleichen Zeit, zu welcher die Bewegung erfasst wird, wird ein dem Fahrzeug zugeordneter Fahrzeugschlüssel erfasst.

Dabei wird die Bewegung des Objekts in dem Umgebungsbereich des Fahrzeugs dadurch überwacht oder erfasst, dass mindestens ein kapazitiver Sensor mit mindestens einem optischen Sensor zusammenwirkt.

Ein Schließelement ist dabei im Rahmen der vorliegenden Erfindung insbesondere eine Klappe (z.B. eine Heckklappe) oder eine Tür des Fahrzeugs. Unter einem Umgebungsbereich wird ein Bereich außerhalb des Fahrzeugs verstanden, welcher eine Ausdehnung aufweist, so dass ein Objekt, welches sich außerhalb des Umgebungsbereichs befindet, sicher nicht von einem sich öffnenden oder schließenden Schließelement des Fahrzeugs berührt wird. Somit weist der Umgebungsbereich einen Bereich auf, welcher in der Regel einen Abstand von nicht mehr als 2 m von dem Fahrzeug bzw. von demjenigen Schließelement aufweist, welches betätigt werden soll. Ein Objekt umfasst sowohl eine Person als auch ein Gliedmaß einer Person, wie z.B. einen Fuß, umfasst aber auch Gegenstände, wie beispielsweise einen Stock. Unter einem Bewegungsprofil wird ein charakteristisches Bewegungsmuster verstanden, welches aus einer oder mehreren Bewegungen zusammengesetzt sind. Unter einer Bewegung wird dabei insbesondere eine geradlinige Bewegung verstanden, welche über die Bewegungsrichtung und über eine Mindestlänge (z.B. 10 cm) der Bewegung in Bewegungsrichtung definiert ist. Ein Beispiel für ein Bewegungsprofil besteht aus einer Hinbewegung und einer Rückbewegung, wobei die Bewegungsrichtung der Hinbewegung im Wesentlichen antiparallel zu der Bewegungsrichtung der Rückbewegung ist. Unter einer Bewegung kann aber auch eine Bewegung eines Objektes von einer Position außerhalb eines Bereiches (z.B. einem Erfassungsbereichs eines Sensors) zu einer Position in diesen Bereich hinein oder von einer Position innerhalb eines Bereiches zu einer Position außerhalb des Bereichs verstanden werden.

Unter einem Zusammenwirken des mindestens einen kapazitiven Sensors mit dem mindestens einen optischen Sensor wird im Rahmen der vorliegenden Erfindung verstanden, dass die automatische Betätigung des Schließelements nur erfolgt, wenn sowohl der mindestens eine kapazitive Sensor als auch der mindestens eine optische Sensor zumindest einen Teil der dem vorgegebenen Bewegungsprofil entsprechenden Bewegung des Objekts erfassen. Beispielsweise ist es möglich, dass der mindestens eine optische Sensor erst dann aktiviert wird, wenn der mindestens eine kapazitive Sensor einen Anteil der dem vorgegebenen Bewegungsprofil entsprechenden Bewegung erfasst hat und der dem Fahrzeug zugeordneter Schlüssel erfasst wurde.

Indem der mindestens eine optische Sensor nur dann von dem mindestens einen kapazitiven Sensor aktiviert wird, wenn der mindestens eine kapazitive Sensor bereits einen Teil der dem vorgegebenen Bewegungsprofil entsprechenden Bewegung erfasst hat und gleichzeitig der dem Fahrzeug zugeordnete Schlüssel erfasst wurde, ist die Ruhestromaufnahme des mindestens einen optischen Sensors wesentlich geringer, als wenn der mindestens eine optische Sensor quasi ständig aktiv sein müsste, um auch den ersten Teil der dem vorgegebenen Bewegungsprofil entsprechenden Bewegung zu erfassen. Daher kann vorteilhafterweise ein optischer Sensor eingesetzt werden, welcher im Vergleich zu einem kapazitiven Sensor einen größeren Erfassungsbereich aufweisen und welcher den Einsatz von Mustererkennungsalgorithmen ermöglicht, um das Bewegungsprofil zu erfassen.

Dabei wird das Schließelement nur betätigt, wenn mittels des mindestens einen optischen Sensors erfasst wird, dass sich kein bewegendes oder still stehendes Objekt in einem Raumbereich befindet, welchen das Schließelement beim Öffnen bzw. Schließen überstreichen würde.

Indem das Schließelement nur betätigt wird, wenn sich kein Objekt in dem Raumbereich befindet, welchen das Schließelement beim Öffnen bzw. Schließen überstreichen würde, wird vorteilhafterweise verhindert, dass beispielsweise die berechtigte Bedienperson selbst von einer sich automatisch schließenden Heckklappe des Fahrzeugs eingeklemmt wird oder dass beispielsweise die Bedienperson selbst beim automatischen Öffnen einer Tür des Kraftfahrzeugs von dieser gestoßen wird. Darüber hinaus wird vermieden, dass insbesondere eine sich öffnende Tür oder Klappe des Fahrzeugs gegen ein Hindernis stößt, wodurch eine sich daraus ergebende Beschädigung der Tür oder Klappe vermieden wird.

Im Rahmen der vorliegenden Erfindung wird auch ein weiteres Verfahren zur automatischen Betätigung eines Schließelements eines Fahrzeugs bereitgestellt. Dabei wird das Schließelement wiederum automatisch dann betätigt, wenn folgende beiden Bedingungen erfüllt sind:
- Eine einem vorgegebenen Bewegungsprofil entsprechende Bewegung eines Objekts in einem Umgebungsbereich des Fahrzeugs wird erfasst.
- Zur gleichen Zeit wird ein dem Fahrzeug zugeordneter Fahrzeugschlüssel erfasst.

Dabei umfasst das Bewegungsprofil zuerst ein Annähern des Objektes an das Fahrzeug und anschließend ein Entfernen des Objektes von dem Fahrzeug, so dass das Schließelement erst betätigt wird, wenn das Entfernen des Objektes von dem Fahrzeug erfasst worden ist.

Indem das Bewegungsprofil aus einer Annäherung des Objektes (beispielsweise der Bedienperson selbst) und einem Entfernen des Objektes von dem Fahrzeug zusammengesetzt ist, kann der Wunsch, das Schließelement zu betätigen (also zu öffnen oder zu schließen), besser erkannt oder erfasst werden, als wenn das Bewegungsprofil nur aus einer Annäherung des Objektes an das Fahrzeug bestehen würde, was nach dem Stand der Technik bisweilen der Fall ist. Darüber hinaus bietet das erfindungsgemäße Verfahren auch die Möglichkeit, dass das Schließelement nur betätigt wird, wenn sich die berechtigte Bedienperson außerhalb eines Bereiches befindet, welchen das Schließelement beim Öffnen oder Schließen überstreicht. Dabei ist vorausgesetzt, dass das Entfernen des Objektes von dem Fahrzeug erst dann vorliegt, wenn sich das Objekt außerhalb dieses Bereiches befindet.

Erfindungsgemäß kann die Annäherung dadurch erfasst werden, dass das Objekt in einen Erfassungsbereich eines Sensors (z.B. eines Näherungssensors) kommt und dass das Entfernen erfasst wird, wenn das Objekt den Erfassungsbereich dieses Sensors wieder verlässt.

Wenn der Erfassungsbereich des Sensors derart ausgebildet ist, dass dieser Erfassungsbereich den Bereich zumindest einschließt, welchen das Schließelement beim Öffnen oder Schließen überstreicht, ist vorteilhafterweise gewährleistet, dass das die Betätigung auslösende Objekt, insbesondere die berechtigte Bedienperson, nicht von dem sich öffnenden oder schließenden Schließelement eingeklemmt oder gestoßen wird.

Unter einer Betätigung eines Schließelements wird dabei im Rahmen der vorliegenden Erfindung ein Öffnen dieses Schließelements verstanden, wenn das Schließelement geschlossen ist, oder ein Schließen des Schließelements verstanden, wenn das Schließelement geöffnet ist.

Es sei darauf hingewiesen, dass im Rahmen der vorliegenden Erfindung ein Bewegungsprofil auch eine Annäherung eines Objektes (z.B. des Fahrers), eine oder mehrere bestimmte Bewegungen dieses Objektes oder eines anderen Objektes (z.B. eine Fußgeste mit dem Fuß des Fahrers oder eine Handgeste bei geöffneter Heckklappe (d.h. ein Wischen über den optischen Sensor an der Heckklappe)) und ein anschließendes Entfernen des Objektes zusammen umfassen kann.

Im Rahmen der vorliegenden Erfindung wird auch eine Vorrichtung zur Betätigung eines Schließelements eines Fahrzeugs bereitgestellt. Dabei umfasst die Vorrichtung einen Mechanismus zur Betätigung des Schließelements, ein Steuergerät, mindestens einen kapazitiven Sensor und mindestens einen optischen Sensor. Das Steuergerät betätigt dabei das Schließelement mittels des Mechanismus dann, wenn die erfindungsgemäße Vorrichtung durch ein Zusammenwirken des mindestens einen kapazitiven Sensors und des mindestens einen optischen Sensors zum einen eine einem vorgegebenen Bewegungsprofil entsprechende Bewegung eines Objekts in einem Umgebungsbereich des Fahrzeugs erfasst und das Steuergerät gleichzeitig einen dem Fahrzeug zugeordneten Fahrzeugschlüssel erfasst.

Die Vorteile der erfindungsgemäßen Vorrichtung entsprechen im Wesentlichen den Vorteilen des entsprechenden erfindungsgemäßen Verfahrens, weshalb hier auf eine Wiederholung verzichtet wird.

Gemäß einer vorteilhaften Ausführungsform umfasst die Vorrichtung eine Kennzeichenbeleuchtung (d.h. eine Vorrichtung zur Beleuchtung eines Kennzeichens bzw. Nummerschildes) des Fahrzeugs. Dabei ist entweder der mindestens eine kapazitive Sensor oder der mindestens eine optische Sensor Bestandteil der Kennzeichenbeleuchtung. Es ist auch möglich, dass sowohl der mindestens eine kapazitive Sensor als auch der mindestens eine optische Sensor Bestandteil der Kennzeichenbeleuchtung sind.

Bei dieser Ausführungsform ist es möglich, dass eine Sensorelektronik, mit welcher der mindestens eine kapazitive Sensor und/oder der mindestens eine optische Sensor angesteuert werden, auch zur Ansteuerung der Kennzeichenbeleuchtung eingesetzt wird. Indem die Sensorelektronik gleichzeitig zur Steuerung des mindestens einen kapazitiven Sensors und des mindestens einen optischen Sensors als auch zur Ansteuerung der Kennzeichenbeleuchtung eingesetzt wird, wird anstelle von getrennten Steuervorrichtungen für die Sensoren und für die Kennzeichenbeleuchtung vorteilhafterweise nur eine Steuervorrichtung benötigt, was platzsparender und bei der Herstellung des Fahrzeugs vorteilhafter ist.

Bei einer weiteren vorteilhaften erfindungsgemäßen Ausführungsform handelt es sich bei dem Schließelement um eine Heckklappe des Fahrzeugs. Dabei ist der mindestens eine optische Sensor derart ausgestaltet, dass der mindestens eine optische Sensor bei geschlossener Heckklappe einen Bereich hinter dem Fahrzeug und bei geöffneter Heckklappe einen Bereich unter der Heckklappe erfasst. Unter dem Bereich hinter dem Fahrzeug wird dabei ein Bereich verstanden, in welchem sich beispielsweise der Fahrer des Fahrzeugs befindet, wenn er nicht mehr als 1 m beabstandet von dem Fahrzeug hinter dem Fahrzeug steht.

Bei dieser erfindungsgemäßen Ausführungsform kann der mindestens eine optische Sensor zum einen sowohl bei geöffneter als auch bei geschlossener Heckklappe dafür eingesetzt werden, um zumindest einen Teil der dem vorgegebenen Bewegungsprofil entsprechenden Bewegung des Objekts zu erfassen. Zum anderen kann sowohl bei geschlossener als auch bei geöffneter Heckklappe mittels des mindestens einen optischen Sensors überprüft werden, ob sich ein Objekt in einem Bereich befindet, welchen die Heckklappe beim Öffnen oder Schließen überstreicht, so dass die Betätigung der Heckklappe von der Vorrichtung vorteilhafterweise nur dann vorgenommen wird, wenn dies nicht der Fall ist.

Im Rahmen der vorliegenden Erfindung wird auch eine weitere Vorrichtung zur Betätigung eines Schließelements eines Fahrzeugs bereitgestellt. Diese Vorrichtung umfasst einen Mechanismus zur Betätigung des Schließelements, ein Steuergerät und mindestens einen Sensor. Ähnlich wie die bereits vorab beschriebene Vorrichtung betätigt das Steuergerät mittels des Mechanismus das Schließelement dann, wenn die erfindungsgemäße Vorrichtung durch den mindestens einen Sensor zum einen eine einem vorgegebenen Bewegungsprofil entsprechende Bewegung eines Objekts in einem Umgebungsbereich des Fahrzeugs erfasst und das Steuergerät gleichzeitig einen dem Fahrzeug zugeordneten Fahrzeugschlüssel erfasst. Dabei umfasst das Bewegungsprofil zuerst eine Annäherung des Objektes an das Fahrzeug (insbesondere an das zu betätigende Schließelement) und anschließend ein Entfernen des Objektes von dem Fahrzeug, so dass das Steuergerät das Schließelement nur dann betätigt, wenn sich das Objekt von dem Fahrzeug entfernt hat.

Auch in diesem Fall entsprechen die Vorteile der erfindungsgemäßen Vorrichtung im Wesentlichen den Vorteilen des entsprechenden erfindungsgemäßen Verfahrens, so dass hier auf eine Wiederholung verzichtet wird.

Der mindestens eine Sensor kann dabei mindestens einen kapazitiven Sensor und mindestens einen optischen Sensor umfassen, wobei die Vorrichtung insbesondere derart ausgestaltet ist, dass die Vorrichtung die dem vorgegebenen Bewegungsprofil entsprechende Bewegung durch ein Zusammenwirken von dem mindestens einen kapazitiven Sensor und von dem mindestens einen optischen Sensor erfasst. Beispielsweise ist es möglich, dass der mindestens eine optische Sensor von dem mindestens einen kapazitiven Sensor aktiviert wird, wenn zum einen der dem Fahrzeug zugeordnete Fahrzeugschlüssel erfasst worden ist und zum anderen der mindestens eine kapazitive Sensor die Annäherung des Objektes erfasst hat.

Schließlich wird im Rahmen der vorliegenden Erfindung ein Fahrzeug mit einer der vorab beschriebenen erfindungsgemäßen Vorrichtungen bereitgestellt.

Die vorliegende Erfindung ist insbesondere zur automatischen Betätigung einer Tür oder Klappe eines Fahrzeugs geeignet. Selbstverständlich ist die vorliegende Erfindung nicht auf diesen bevorzugten Anwendungsbereich beschränkt. Beispielsweise kann die vorliegende Erfindung auch eingesetzt werden, um ein Fenster oder ein Schiebedach des Fahrzeugs zu betätigen. Darüber hinaus kann die vorliegende Erfindung auch bei Flugzeugen, Schiffen oder gleisgebundenen Fahrzeugen eingesetzt werden.

Im Folgenden wird die vorliegende Erfindung im Detail mit Bezug zu den Figuren anhand erfindungsgemäßer Ausführungsformen beschrieben.

In Fig. 1 ist ein erfindungsgemäßes Fahrzeug mit einer automatisch zu betätigenden geöffneten Heckklappe dargestellt.

In Fig. 2 ist eine weitere erfindungsgemäße Ausführungsform eines Fahrzeugs mit einer automatisch zu betätigenden Heckklappe dargestellt.

In Fig. 3 ist das in Fig. 2 dargestellte Fahrzeug mit geschlossener Heckklappe abgebildet.

In Fig. 4 ist ein erfindungsgemäßes Fahrzeug mit einer erfindungsgemäßen Vorrichtung schematisch dargestellt.

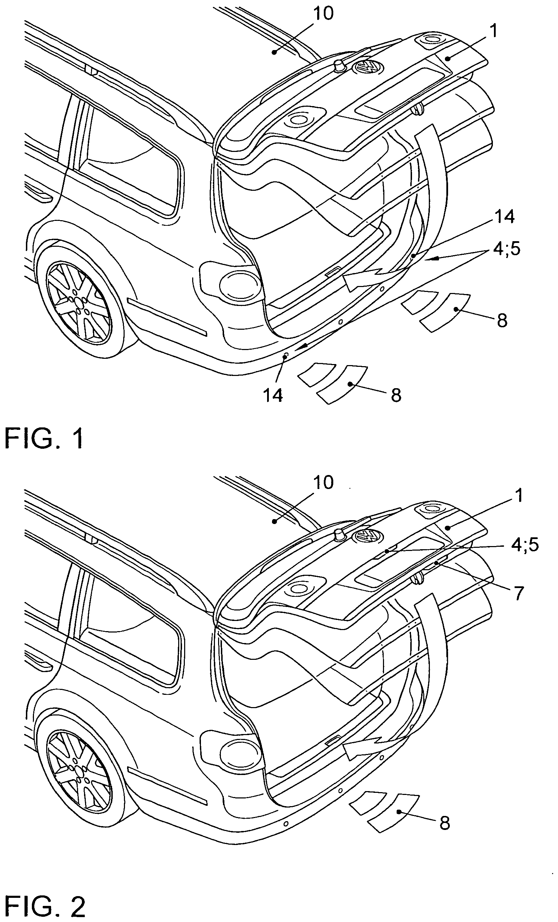

In Fig. 1 ist eine erste erfindungsgemäße Ausführungsform eines Fahrzeugs 10 dargestellt, bei welchem eine Heckklappe 1 des Fahrzeugs 10 automatisch zu betätigen ist. Dabei befindet sich jeweils ein kapazitiver Sensor 5 und ein optischer Sensor 4 in zwei Katzenaugen (Retroreflektoren) 14 am Heck des Fahrzeugs 10. Ein Erfassungsbereich 8 des jeweiligen optischen Sensors 5 überstreicht einen Bereich hinter dem Fahrzeug 10, welcher sich jeweils rechts bzw. links neben einer Mittelachse (in Fahrrichtung) des Fahrzeugs 10 befindet.

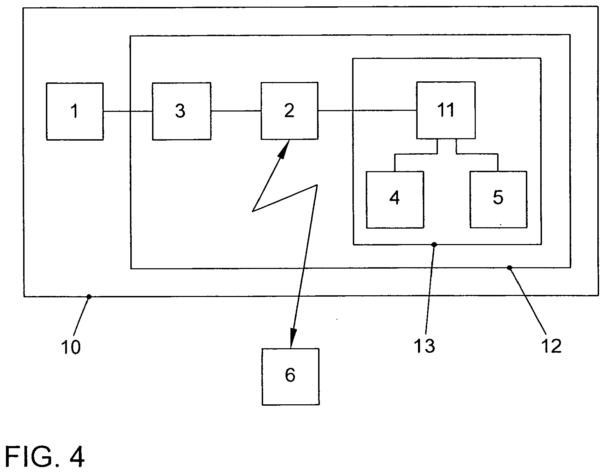

Im Folgenden werden Vorgänge beschrieben, welche in der angegebenen Reihenfolge durchgeführt werden, bevor das Schließelement, in diesem Fall eine Heckklappe 1, betätigt wird.
1. Einer der kapazitiven Sensoren 5 hat eine Bewegung eines Objektes in Richtung des Katzenauges 14, in welchem er eingebaut ist, erfasst. Mit anderen Worten hat der entsprechende kapazitive Sensor 5 erfasst, dass sich ein Objekt, welches sich vorher außerhalb seines Erfassungsbereiches befand, nun in seinem Erfassungsbereich hinein bewegt hat. Dieser Vorgang wird als "inward completed" bezeichnet.
2. Über ein Steuergerät 2 (siehe Fig. 4) wird eine Authentifizierung eines für das Fahrzeug 10 berechtigten ID-Gebers angestoßen, wie dies bei mit Keyless-Entry-Systemen ausgestatteten Fahrzeugen der Fall ist. Wird dabei kein berechtigter ID-Geber erfasst, wird kein weiterer Vorgang mehr abgearbeitet ("break action") und das Schließelement 1 wird nicht betätigt.
3. Wenn ein gültiger ID-Geber erfasst worden ist, wird der optische Sensor 4 aktiviert. Dabei ist es möglich, dass nur derjenige optische Sensor 4 aktiviert wird, welcher im selben Katzenauge 14 verbaut ist, oder dass beiden optischen Sensoren 4 aktiviert werden.
4. Mittels des optischen Sensors 4 wird die von dem kapazitiven Sensor 5 erfasste Bewegung verifiziert ("compare movement"). Wenn die Daten des optischen Sensors 4 nicht mit den Daten des kapazitiven Sensors 5 übereinstimmen (z.B. wenn der kapazitive Sensor 5 eine Annäherung erfasst, aber der optische Sensor 4 keine Annäherung erfasst) wird kein weiterer Vorgang mehr abgearbeitet ("break action") und das Schließelement wird nicht betätigt.
5. Weitere Bewegungen des Objekts werden von dem mindestens einen optischen Sensor 4 erfasst und ausgewertet. Wenn der mindestens eine optische Sensor 4 in einer vorbestimmten Zeitspanne nicht die vollständige dem vorgegebenen Bewegungsprofil entsprechende Bewegung erfasst, wird kein weiterer Vorgang mehr abgearbeitet ("break action") und das Schließelement 1 wird nicht betätigt.
6. Mit Hilfe den optischen Sensoren 4 (spätestens ab hier sollten beide optischen Sensoren 4 aktiviert sein) werden die Erfassungsbereiche 8 der optischen Sensoren 4 abgetastet, wobei diese Erfassungsbereiche 8 einen Bereich umfassen, welchen das Schließelement 1 beim Öffnen überstreicht. Befinden sich auch nach einem vorbestimmten Zeitinterval noch Objekte, wie z.B. der Fahrer des Fahrzeugs 10, in einem der Erfassungsbereiche 8 wird kein weiterer Vorgang mehr abgearbeitet (("break action") und das Schließelement 1 wird nicht betätigt.
7. Das Schließelement 1 wird geöffnet ("open trunk"), wobei nach wie vor die Erfassungsbereiche 8 des optischen Sensors 4 abgetastet werden. Wird beim Öffnen des Schließelements 1 ein in einen der Erfassungsbereiche 8 eintretendes Objekt erfasst, wird das Öffnen abgebrochen ("break action").

Bei der vorab beschriebenen Ausführungsform wird das Schließelement 1 demnach nur dann betätigt, wenn zum einen eine dem vorgegebenen Bewegungsprofil entsprechende Bewegung eines Objekts erfasst worden ist und wenn zum anderen nach dem Erfassen dieser Bewegung kein Objekt in einem der Erfassungsbereiche 8 der optischen Sensoren 4 erfasst wird. Die Bewegung des Objektes besteht dabei beispielsweise aus einem Fuß oder einem Unterschenkel des Fahrers des Fahrzeugs, welcher in Form einer ersten Bewegung unter das Fahrzeug (unter einen der beiden kapazitiven Sensoren 5 und damit unter einen der beiden optischen Sensoren 4) geschoben wird und welcher anschließend in Form einer zweiten Bewegung wieder zurück in eine Ausgangsposition hinter das Fahrzeug 10 gezogen wird. Natürlich kann man sich das Entfernen des Objektes aus den Erfassungsbereichen der optischen Sensoren 4, so dass sich kein Objekt in einem der Erfassungsbereiche 8 der optischen Sensoren 4 befindet, auch als Bestandteil des Bewegungsprofils denken.

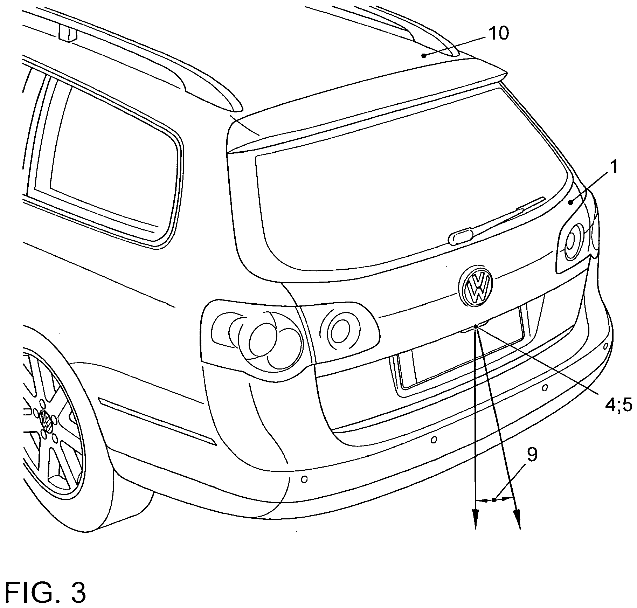

In Fig. 2 ist eine weitere erfindungsgemäße Ausführungsform eines Fahrzeugs 10 zur automatischen Betätigung eines Schließelements bzw. einer Heckklappe 1 dargestellt. Dabei ist ein kapazitiver Sensor 5, ein erster optischer Sensor 4 und ein zweiter optischer Sensor 7 in einer Kennzeichenbeleuchtung des Fahrzeugs 10 angeordnet. Dabei wird der erste optische Sensor 4 beim Öffnen der Heckklappe 1 und der zweite optische Sensor 7 beim Schließen der Heckklappe 1 eingesetzt. Der erste optische Sensor 4 ist bei geschlossener Heckklappe 1 derart ausgerichtet, dass er einen Erfassungsbereich hinter dem Fahrzeug 10 abdeckt, wie es in Fig. 3 dargestellt ist. Dagegen ist der zweite optische Sensor 7 bei geöffneter Heckklappe 1 derart ausgerichtet, dass er einen Erfassungsbereich 8 unterhalb der geöffneten Heckklappe 1 abdeckt.

In Fig. 3 ist das in Fig. 2 dargestellte Fahrzeug 10 mit geschlossener Heckklappe 1 dargestellt. Der kapazitive Sensor 5 und der erste optische Sensor 4 sind derart ausgebildet, dass ihr Erfassungsbereich einen Winkelbereich 9 von 10° bis 30° überdeckt. Dabei erstreckt sich der Winkelbereich 9 von einem von dem kapazitiven Sensor 5 oder von dem optischen Sensor 4 senkrecht nach unten verlaufenden Schenkel des Winkels 9 zu einem sich vom Fahrzeug 10 entgegen der Fahrtrichtung nach hinten erstreckenden Schenkel des Winkels 9. Der optische Sensor besteht allgemein insbesondere aus mehreren LEDs als Empfänger optischer Strahlung, welche bei dieser Ausführungsform in Richtung des Öffnungsbereichs der Heckklappe 1 ausgerichtet sind.

In Fig. 4 ist ein erfindungsgemäßes Fahrzeug 10 dargestellt, welches eine Heckklappe 1 als Schließelement und eine erfindungsgemäße Vorrichtung 12 umfasst. Die Vorrichtung 12 umfasst ihrerseits eine Kennzeichenbeleuchtung 13, ein Steuergerät 2 und einen Mechanismus 3 zum Öffnen und zum Schließen der Heckklappe 1. In der Kennzeichenbeleuchtung 13 ist ein kapazitiver Sensor 5 und ein optischer Sensor 4 angeordnet, welche von einer Sensorelektronik 11 gesteuert werden, die ebenfalls in der Kennzeichenbeleuchtung 13 angeordnet ist und neben den Sensoren 4, 5 auch die Kennzeichenbeleuchtung 13 selbst steuert.

Zum Öffnen der Heckklappe 1 nähert sich der einen für das Fahrzeug 10 berechtigten Schlüssel 6 bei sich tragende Fahrer der Kennzeichenbeleuchtung 13, was von dem kapazitiven Sensor 4 erfasst wird. Über die Sensorelektronik 11 wird das Steuergerät 2 informiert, welches dann nach dem für das Fahrzeug 10 berechtigten Fahrzeugschlüssel 6 sucht. Erfasst das Steuergerät 2 den für das Fahrzeug 10 berechtigten Fahrzeugschlüssel 6, wird der optische Sensor 5 über die Sensorelektronik 11 aktiviert. Erfasst der optische Sensor 4, dass sich der Fahrer aus dem Erfassungsbereich des optischen Sensors 4 heraus bewegt, informiert die Sensorelektronik 11 das Steuergerät 2, welches über den Mechanismus 3 die Heckklappe 1 öffnet.

## Patentansprüche

1. Verfahren zur automatischen Betätigung eines Schließelements (1) eines Fahrzeugs (10),
wobei das Schließelement (1) automatisch betätigt wird,
• wenn eine einem vorgegebenen Bewegungsprofil entsprechende Bewegung eines Objekts in einem Umgebungsbereich des Fahrzeugs (10) erfasst wird, und
• wenn gleichzeitig ein dem Fahrzeug (10) zugeordneter Fahrzeugschlüssel (6) erfasst wird,
wobei die Bewegung des Objekts in dem Umgebungsbereich des Fahrzeugs (10) durch das Zusammenwirken mindestens eines kapazitiven Sensors (5) und mindestens eines optischen Sensors (4, 7) überwacht wird, und
wobei das Schließelement (1) nur betätigt wird, wenn mit dem mindestens einen optischen Sensor (4, 7) erfasst wird, dass sich kein Objekt in einem Bereich (8) befindet, welchen das Schließelement (1) beim Öffnen oder Schließen überstreicht.

2. Verfahren nach Anspruch 1, **dadurch gekennzeichnet, dass** der mindestens eine optische Sensor (4, 7) erst aktiviert wird, wenn der mindestens eine kapazitive Sensor (5) einen Teil der dem vorgegebenen Bewegungsprofil entsprechenden Bewegung erfasst hat und der dem Fahrzeug (10) zugeordnete Schlüssel (6) erfasst wurde.

3. Verfahren zur automatischen Betätigung eines Schließelements (1) eines Fahrzeugs (10),
wobei das Schließelement (1) automatisch betätigt wird,
• wenn eine einem vorgegebenen Bewegungsprofil entsprechende Bewegung eines Objekts in einem Umgebungsbereich des Fahrzeugs (10) erfasstwird, und
• wenn gleichzeitig ein dem Fahrzeug (10) zugeordneter Fahrzeugschlüssel (6) erfasst wird,
wobei das Bewegungsprofil zuerst eine Annäherung an das Fahrzeug (10) und ein anschließendes Entfernen von dem Fahrzeug (10) umfasst, so dass das Schließelement (1) erst nach dem Entfernen von dem Fahrzeug (10) betätigt wird.

4. Verfahren nach Anspruch 3, **dadurch gekennzeichnet, dass** die Annäherung erfasst wird, wenn das Objekt in einen Erfassungsbereich (8) mindestens eine eines Sensors (4, 5, 7) kommt, und dass das Entfernen erfasst wird, wenn das Objekt den Erfassungsbereich (8) des mindestens einen Sensors (4, 5, 7) verlässt.

5. Verfahren nach einem der vorhergehenden Ansprüche,
**dadurch gekennzeichnet,**
**dass** das Schließelement eine Tür oder eine Klappe (1) des Fahrzeugs (10) ist, und dass die Betätigung des Schließelements (1) ein Öffnen des Schließelements (1) bedeutet, wenn das Schließelement (1) geschlossen ist, und ein Schließen des Schließelements (1) bedeutet, wenn das Schließelement (1) geöffnet ist.

6. Vorrichtung zur Betätigung eines Schließelements eines Fahrzeugs,
wobei die Vorrichtung (12) einen Mechanismus (3) zur Betätigung des Schließelements (1), ein Steuergerät (2), mindestens einen kapazitiven Sensor (5) und mindestens einen optischen Sensor (4, 7) umfasst,
wobei die Vorrichtung (12) derart ausgestaltet ist, dass das Steuergerät (2) mittels des Mechanismus (3) das Schließelement (1) betätigt, wenn die Vorrichtung (12) durch ein Zusammenwirken des mindestens einen kapazitiven Sensors (5) und des mindestens einen optischen Sensors (4, 7) eine einem vorgegebenen Bewegungsprofil entsprechende Bewegung eines Objekts in einem Umgebungsbereich des Fahrzeugs (10) erfasst und das Steuergerät (2) gleichzeitig einen dem Fahrzeug (10) zugeordneten Fahrzeugschlüssel (6) erfasst, und
wobei die Vorrichtung (12) derart ausgestaltet ist, dass die Vorrichtung (12) das Schließelement (1) nur betätigt, wenn der mindestens eine optische Sensor (4, 7) erfasst, dass sich kein Objekt in einem Bereich (8) befindet, welchen das Schließelement (1) beim Öffnen oder Schließen überstreicht.

7. Vorrichtung nach Anspruch 6,
**dadurch gekennzeichnet,**
**dass** die Vorrichtung (12) eine Kennzeichenbeleuchtung (13) des Fahrzeugs (10) umfasst, und
**dass** der mindestens eine kapazitive Sensor (5) und/oder der mindestens eine optische Sensor (4, 7) in der Kennzeichenbeleuchtung (13) eingebaut sind.

8. Vorrichtung nach Anspruch 7,
**dadurch gekennzeichnet,**
**dass** die Vorrichtung eine Sensorelektronik (11) umfasst, mit welcher der mindestens eine kapazitive Sensor (5) und der mindestens eine optische Sensor (4, 7) angesteuert werden, und
**dass** die Sensorelektronik (11) auch zur Ansteuerung der Kennzeichenbeleuchtung (13) ausgestaltet ist.

9. Vorrichtung nach einem der Ansprüche 6-8,
**dadurch gekennzeichnet,**
**dass** das Schließelement eine Heckklappe (1) des Fahrzeugs (10) ist,
**dass** der mindestens eine optische Sensor (4, 7) derart ausgestaltet ist, dass der optische Sensor (4, 7) bei geschlossener Heckklappe (1) einen Bereich hinter dem Fahrzeug (10) erfasst und dass der mindestens eine optische Sensor (4, 7) bei geöffneter Heckklappe (1) einen Bereich (8) unter der Heckklappe (1) erfasst.

10. Vorrichtung nach einem der Ansprüche 6-9, **dadurch gekennzeichnet, dass** die Vorrichtung (12) zur Durchführung des Verfahrens nach Anspruch 1 oder 2 ausgestaltet ist.

11. Vorrichtung zur Betätigung eines Schließelements eines Fahrzeugs,
wobei die Vorrichtung (12) einen Mechanismus (3) zur Betätigung des Schließelements (1), ein Steuergerät (2) und mindestens einen Sensor umfasst,
wobei die Vorrichtung (12) derart ausgestaltet ist, dass das Steuergerät (2) mittels des Mechanismus (3) das Schließelement (1) betätigt, wenn die Vorrichtung (12) durch den mindestens einen Sensor eine einem vorgegebenen Bewegungsprofil entsprechende Bewegung eines Objekts in einem Umgebungsbereich des Fahrzeugs (10) erfasst und das Steuergerät (2) gleichzeitig einen dem Fahrzeug (10) zugeordneten Fahrzeugschlüssel (6) erfasst,
wobei das Bewegungsprofil zuerst eine Annäherung an das Fahrzeug (10) und ein anschließendes Entfernen von dem Fahrzeug (10) umfasst, so dass die Vorrichtung (12) das Schließelement (1) erst nach dem Entfernen des Objekts von dem Fahrzeug (10) betätigt.

12. Vorrichtung nach Anspruch 11, **dadurch gekennzeichnet, dass** der mindestens eine Sensor einen kapazitiven Sensor (5) und einen optischen Sensor (4, 7) umfasst und dass die Vorrichtung (12) derart ausgestaltet ist, dass die Vorrichtung (12) die Bewegung durch ein Zusammenwirken von dem kapazitiven Sensor (5) und dem optischen Sensor (4, 7) erfasst.

13. Vorrichtung nach Anspruch 11 oder 12, **dadurch gekennzeichnet, dass** die Vorrichtung (12) zur Durchführung des Verfahrens nach einem der Ansprüche 1-5 ausgestaltet ist.

14. Fahrzeug (10) mit einer Vorrichtung (12) nach einem der Ansprüche 6-13.

## Claims

1. Method for automatically operating a closing element (1) of a vehicle (10),
wherein the closing element (1) is automatically operated
• when a movement of an object, which movement corresponds to a prespecified movement profile, is detected in a region surrounding the vehicle (10), and
• when, at the same time, a vehicle key (6) which is associated with the vehicle (10) is detected,
wherein the movement of the object in the region surrounding the vehicle (10) is monitored by the interaction between at least one capacitive sensor (10) and at least one optical sensor (4, 7), and
wherein the closing element (1) is only operated when the at least one optical sensor (4, 7) detects that there is no object in a region (8) through which the closing element (1) passes as it is opened or closed.

2. Method according to Claim 1, **characterized in that** the at least one optical sensor (4, 7) is first activated when the at least one capacitive sensor (5) has detected a portion of the movement which corresponds to the prespecified movement profile and the key (6) which is associated with the vehicle (10) has been detected.

3. Method for automatically operating a closing element (1) of a vehicle (10),
wherein the closing element (1) is automatically operated
• when a movement of an object, which movement corresponds to a prespecified movement profile, is detected in a region surrounding the vehicle (10), and
• when, at the same time, a vehicle key (6) which is associated with the vehicle (10) is detected,
wherein the movement profile first comprises a movement approaching the vehicle (10) and a subsequent movement away from the vehicle (10), so that the closing element (1) is first operated after the movement away from the vehicle (10).

4. Method according to Claim 3,
**characterized**
**in that** the approaching movement is detected when the object enters a detection region (8) at least one of a sensor (4, 5, 7), and in that the movement away is detected when the object leaves the detection region (8) of the at least one sensor (4, 5, 7).

5. Method according to one of the preceding claims,
**characterized**
**in that** the closing element is a door or a hatch (1) of the vehicle (10), and
**in that** the operation of the closing element (1) means opening of the closing element (1) when the closing element (1) is closed and means closing of the closing element (1) when the closing element (1) is open.

6. Apparatus for operating a closing element of a vehicle,
wherein the apparatus (12) comprises a mechanism (3) for operating the closing element (1), a controller (2), at least one capacitive sensor (5) and at least one optical sensor (4, 7),
wherein the apparatus (12) is configured in such a way that the controller (2) operates the closing element (1) by means of the mechanism (3) when the apparatus (12) detects a movement of an object, which movement corresponds to a prespecified movement profile, in a region surrounding the vehicle (10) by an interaction between the at least one capacitive sensor (5) and the at least one optical sensor (4, 7), and the controller (2), at the same time, detects a vehicle key (6) which is associated with the vehicle (10), and
wherein the apparatus (12) is configured in such a way that the apparatus (12) only operates the closing element (1) when the at least one optical sensor (4, 7) detects that there is no object in a region (8) through which the closing element (1) passes as it is opened or closed.

7. Apparatus according to Claim 6,
**characterized**
**in that** the apparatus (12) comprises a license plate lighting arrangement (13) of the vehicle (10), and
**in that** the at least one capacitive sensor (5) and/or the at least one optical sensor (4, 7) are incorporated in the license plate lighting arrangement (13).

8. Apparatus according to Claim 7,
**characterized**
**in that** the apparatus comprises a sensor electronics system (11) with which the at least one capacitive sensor (5) and the at least one optical sensor (4, 7) are actuated, and
**in that** the sensor electronics system (11) is also configured to actuate the license plate lighting arrangement (13).

9. Apparatus according to one of Claims 6-8,
**characterized**
**in that** the closing element is a tailgate (1) of the vehicle (10),
**in that** the at least one optical sensor (4, 7) is configured in such a way that the optical sensor (4, 7) detects a region behind the vehicle (10) when the tailgate (1) is closed, and in that the at least one optical sensor (4, 7) detects a region (8) beneath the tailgate (1) when the tailgate (1) is open.

10. Apparatus according to one of Claims 6-9,
**characterized in that** the apparatus (12) is configured to carry out the method according to Claim 1 or 2.

11. Apparatus for operating a closing element of a vehicle,
wherein the apparatus (12) comprises a mechanism (3) for operating the closing element (1), a controller (2) and at least one sensor,
wherein the apparatus (12) is configured in such a way that the controller (2) operates the closing element (1) by means of the mechanism (3) when the apparatus (12) detects a movement of an object, which movement corresponds to a prespecified movement profile, in a region surrounding the vehicle (10) by way of the at least one sensor, and the controller (2), at the same time, detects a vehicle key (6) which is associated with the vehicle (10),
wherein the movement profile first comprises a movement approaching the vehicle (10) and a subsequent movement away from the vehicle (10), so that the apparatus (12) first operates the closing element (1) after the object moves away from the vehicle (10).

12. Apparatus according to Claim 11,
**characterized**
**in that** the at least one sensor comprises a capacitive sensor (5) and an optical sensor (4, 7), and
**in that** the apparatus (12) is configured in such a way that the apparatus (12) detects the movement by an interaction between the capacitive sensor (5) and the optical sensor (4, 7).

13. Apparatus according to Claim 11 or 12,
**characterized**
**in that** the apparatus (12) is configured to carry out the method according to one of Claims 1-5.

14. Vehicle (10) comprising an apparatus (12) according to one of Claims 6-13.

## Revendications

1. Procédé d'actionnement automatique d'un élément de fermeture (1) d'un véhicule (10),
dans lequel l'élément de fermeture (1) est actionné automatiquement
• quand un mouvement d'un objet correspondant à un profil de mouvement prédéfini est détecté dans une région environnante du véhicule (10), et
• quand, en même temps, une clé de véhicule (6) associée au véhicule (10) est détectée,
dans lequel le mouvement de l'objet dans la région environnante du véhicule (10) est surveillé par l'interaction d'au moins un capteur capacitif (5) et d'au moins un capteur optique (4, 7), et
dans lequel l'élément de fermeture (1) n'est actionné que lorsqu'il est détecté au moyen de l'au moins un capteur optique (4, 7) qu'aucun objet ne se trouve dans une région (8) qui balaye l'élément de fermeture (1) lors de l'ouverture ou de la fermeture.

2. Procédé selon la revendication 1, **caractérisé en ce que** l'au moins un capteur optique (4, 7) n'est activé que lorsque l'au moins un capteur capacitif (5) a détecté une partie du mouvement correspondant au profil de mouvement prédéfini et a détecté la clé (6) associée au véhicule (10).

3. Procédé d'actionnement automatique d'un élément de fermeture (1) d'un véhicule (10),
dans lequel l'élément de fermeture (1) est actionné automatiquement
• quand un mouvement d'un objet correspondant à un profil de mouvement prédéfini est détecté dans une région environnante du véhicule (10), et
• quand, en même temps, une clé de véhicule (6) associée au véhicule (10) est détectée,
dans lequel le profil de mouvement de l'objet comprend tout d'abord un rapprochement par rapport au véhicule (10) puis un éloignement par rapport au véhicule (10), de sorte que l'élément de fermeture (1) n'est actionné qu'après l'éloignement par rapport au véhicule (10).

4. Procédé selon la revendication 3, **caractérisé en ce que** le rapprochement est détecté lorsque l'objet pénètre dans une région de détection (8) au moins un d'un capteur (4, 5, 7), et **en ce que** l'éloignement est détecté lorsque l'objet sort de la région de détection (8) de l'au moins un capteur (4, 5, 7).

5. Procédé selon l'une quelconque des revendications précédentes,
**caractérisé en ce que** l'élément de fermeture est une porte ou un capot (1) du véhicule (10), et **en ce que** l'actionnement de l'élément de fermeture (1) entraîne une ouverture de l'élément de fermeture (1) quand l'élément de fermeture (1) est fermé, et une ouverture de l'élément de fermeture (1) quand l'élément de fermeture (1) est ouvert.

6. Dispositif d'actionnement automatique d'un élément de fermeture d'un véhicule,
dans lequel le dispositif (12) comprend un mécanisme (3) d'actionnement de l'élément de fermeture (1), un appareil de commande (2), au moins un capteur capacitif (5) et au moins un capteur optique (4, 7),
dans lequel le dispositif (12) est configuré de manière à ce que l'appareil de commande (2) actionne l'élément de fermeture (1) au moyen du mécanisme (3) quand le dispositif (12) détecte un mouvement d'un objet correspondant à un profil de mouvement prédéfini d'un objet dans une zone environnante du véhicule (10) par une interaction de l'au moins un capteur capacitif (5) et de l'au moins un capteur optique (4, 7) et quand, en même temps, l'appareil de commande (2) détecte une clé de véhicule (6) associée au véhicule (10), et
dans lequel le dispositif (12) est configuré de manière à ce que le dispositif (12) n'actionne l'élément de fermeture (1) que lorsque l'au moins un capteur optique (4, 7) détecte qu'aucun objet ne se trouve dans une zone (8) qui balaye l'élément de fermeture (1) lors de l'ouverture ou de la fermeture.

7. Dispositif selon la revendication 6,
**caractérisé en ce que** le dispositif (12) comprend un éclairage de plaque d'immatriculation (13) du véhicule (10), et
**en ce que** l'au moins un capteur capacitif (5) et/ou l'au moins un capteur optique (4, 7) sont incorporés à l'éclairage de la plaque d'immatriculation (13).

8. Dispositif selon la revendication 7,
**caractérisé en ce que** le dispositif comprend une électronique de capteur (11) permettant de commander l'au moins un capteur capacitif (5) et l'au moins un capteur optique (4, 7), et
**en ce que** l'électronique de capteur (11) est également configurée pour commander l'éclairage de plaque d'immatriculation (13).

9. Dispositif selon l'une quelconque des revendications 6 à 8,
**caractérisé en ce que** l'élément de fermeture est un hayon (1) du véhicule (10),
**en ce que** l'au moins un capteur optique (4, 7) est configuré de manière à ce que le capteur optique (4, 7) détecte une région située à l'arrière du véhicule (10) lorsque le hayon (1) est fermé et **en ce que** l'au moins un capteur optique (4, 7) détecte une région (8) située en dessous du hayon (1) lorsque le hayon (1) est ouvert.

10. Dispositif selon l'une quelconque des revendications 6 à 9, **caractérisé en ce que** le dispositif (12) est configuré pour mettre en oeuvre le procédé selon la revendication 1 ou 2.

11. Dispositif d'actionnement d'un élément de fermeture d'un véhicule,
dans lequel le dispositif (12) comprend un mécanisme (3) d'actionnement de l'élément de fermeture (1), un appareil de commande (2) et au moins un capteur,
dans lequel le dispositif (12) est configuré de manière à ce que l'appareil de commande (2) actionne l'élément de fermeture (1) au moyen du mécanisme (3) quand le dispositif (12) détecte un mouvement d'un objet correspondant à un profil de mouvement prédéfini dans une région environnante du véhicule (10) au moyen de l'au moins un capteur et quand, en même temps, l'appareil de commande (2) détecte une clé de véhicule (6) associée au véhicule (10),
dans lequel le profil de mouvement comprend tout d'abord un rapprochement par rapport au véhicule (10) puis un éloignement par rapport au véhicule (10), de sorte que le dispositif (12) n'actionne l'élément de fermeture (1) qu'après l'éloignement de l'objet par rapport au véhicule (10).

12. Dispositif selon la revendication 11, **caractérisé en ce que** l'au moins un capteur comprend un capteur capacitif (5) et un capteur optique (4, 7) et **en ce que** le dispositif (12) est configuré de manière à ce que le dispositif (12) détecte le mouvement par une interaction du capteur capacitif (5) et du capteur optique (4, 7).

13. Dispositif selon la revendication 11 ou 12, **caractérisé en ce que** le dispositif (12) est configuré pour mettre en oeuvre le procédé selon l'une quelconque des revendications 1 à 5.

14. Véhicule (10) comportant un dispositif (12) selon l'une quelconque des revendications 6 à 13.
